# FASCICULE DE BREVET EUROPEEN

(11) **EP 1 909 996 B1**
(45) Date de publication et mention de la délivrance du brevet: **25.09.2013**
(21) Numéro de dépôt: 06778817.4
(22) Date de dépôt: 07.07.2006
(51) Int. Cl.: B22F 3/11, B22F 1/02, B22F 1/00, G10K 11/00, G10K 11/162, B23K 35/02, B23K 1/00

(54) **PROCÉDÉ DE FABRICATION ET D'ASSEMBLAGE PAR BRASURE DE BILLES EN SUPERALLIAGE ET OBJETS FABRIQUÉS AVEC DE TELS ASSEMBLAGES**
VERFAHREN ZUR HERSTELLUNG UND VERBINDUNG VON SUPERLEGIERUNGSKUGELN MITTELS LÖTEN UND MIT SOLCHEN VERBINDUNGEN HERGESTELLTE OBJEKTE
METHOD OF PRODUCING AND JOINING SUPERALLOY BALLS BY MEANS OF BRAZING AND OBJECTS PRODUCED WITH SUCH JOINTS

(30) Priorité: 07.07.2005 FR 0507255
(43) Date de publication de la demande: 16.04.2008
(73) Titulaire: ONERA (Office National d'Etudes et de Recherches Aérospatiales), 92320 Châtillon (FR)
(72) Inventeur: DOUIN, Myriam, F-33710 St. Ciers de Canesse (FR); BACOS, Marie-Pierre, F-92160 Antony (FR); BOYER, Alexandra, F-92160 Fontenay aux Roses (FR); GREGOIRE, Aurélie, F-75006 Paris (FR); JOSSO, Pierre, F-92130 Issy Les Moulineaux (FR); MERCIER, Sébastien, F-92140 Clamart (FR); MOREL, Ariel, F-91200 Athis Mons (FR); NADLER, Jason, F-75001 Paris (FR); NAVEOS, Serge, F-92290 Chatenay Malabry (FR); RIO, Catherine, F-91470 Limours (FR)
(74) Mandataire: Bezault, Jean
(86) Numéro de dépôt international: PCT/FR2006/001643
(87) Numéro de publication internationale: WO 2007/006945

(56) Documents cités:
- FR-A1- 2 777 215
- US-A- 3 508 599
- US-A- 3 781 170
- US-A- 4 043 381
- US-A- 4 775 598
- US-A- 5 073 459
- DATABASE COMPENDEX [Online] ENGINEERING INFORMATION, INC., NEW YORK, NY, US; QUEHEILLALT DOUGLAS T ET AL: "Ultrasonic characterization of cellular metal structures" XP002376854 Database accession no. E2002096870581 -& MATER. SCI. ENG. A; MATERIALS SCIENCE AND ENGINEERING A JAN 31 2002, vol. 323, no. 1-2, 31 janvier 2002 (2002-01-31), pages 138-147, XP002376786

## Description

L'invention concerne un procédé pour réaliser simultanément une multiplicité de corps creux métalliques.

L'émission sonore d'un avion à usage commercial peut atteindre 155 dB au décollage, valeur supérieure au seuil de douleur auditive évalué à 130 dB. Il est donc souhaitable de diminuer ce niveau d'émission sonore. Une voie pour tenter de résoudre ce problème consiste à absorber le bruit à l'un de ses points d'émission, c'est-à-dire au niveau des moteurs. Des solutions ont déjà été mises en oeuvre dans les parties "froides" des moteurs, mais les parties "chaudes" ne font actuellement l'objet d'aucun traitement acoustique. Il est donc souhaitable de développer un matériau ayant une fonction d'absorption acoustique destiné aux parties chaudes des moteurs d'avions. Pour ce faire, une voie envisagée est d'élaborer une tuyère capable d'absorber en partie le bruit produit à l'intérieur du moteur.

Par ailleurs, pour remplir une fonction de protection des biens et des personnes, la fabrication de systèmes capables d'absorber beaucoup d'énergie cinétique tout en présentant un poids très faible est d'un indéniable intérêt.

Un système peut répondre à ces différents cahiers des charges: l'utilisation de matériaux cellulaires à base de billes.

Cependant, il n'existe actuellement sur le marché que des sphères à base de nickel et des sphères céramiques ou organiques. L'assemblage par frittage de ces éléments ne permet pas de varier à l'infini les combinaisons souhaitables pour la réalisation des objectifs ci-dessus et en outre les capacités en températures sont extrêmement limitées tant au niveau de la résistance mécanique qu'à celui de la résistance à l'environnement oxydant et corrosif rencontré dans les moteurs d'avions.

Dans ce cadre, le document US 4775 598 décrit la fabrication de corps creux à partir de corps de base comprenant une coque en nickel, entourant de tous côtés un polymère expansé, et des particules en nickel recouvrant la face extérieure de ladite coque, lesdites particules étant liées entre elles par frittage.

Par ailleurs, l'article scientifique "Ultrasonic characterization of cellular metal structures", paru le 31 janvier 2002 dans la revue "Materials Science and Engineering", vol. 323, pages 138-147, décrit la fabrication d'un matériau cellulaire composé de poudres creuses en superalliage IN 625, liées entre elles par frittage HIP.

Pour résoudre ces difficultés il a été décidé d'étudier un nouveau matériau qui présenterait les avantages suivants:
- Possibilité d'avoir des performances prédites dans un cahier des charges issu de la modélisation.
- Possibilité d'être constitué du matériau le plus adapté à l'utilisation.
- Possibilité d'avoir des parois denses en une seule opération.
- Possibilité d'être multifonctionnel.

L'invention vise notamment un procédé du genre défini par la revendication 1.

Des caractéristiques optionnelles de l'invention, complémentaires ou de substitution, sont énoncées ci-après:
- Le premier matériau métallique est constitué de nickel et/ou de cobalt.
- Le second matériau métallique est constitué d'un superalliage à base de nickel et/ou de cobalt.
- Le brasage est réalisé en utilisant comme brasure un alliage à base de nickel et/ou de cobalt contenant du bore ou du phosphore.
- La brasure est obtenue par dépôt chimique à partir d'un bain contenant au moins un sel de nickel et/ou de cobalt et un composé de bore ou de phosphore.
- La brasure est sous la forme d'un revêtement desdites particules.
- Les particules sont mises en oeuvre par collage au moyen d'une colle qui est éliminée par pyrolyse lors du brasage.
- Ledit espace central des corps de base est vide, lesdites particules recouvrant la face extérieure de la coque.
- On dispose les corps de base en contact mutuel de manière à obtenir une structure métallique alvéolaire unitaire par le brasage des particules recouvrant l'ensemble des corps de
   base.
- Ledit espace central des corps de base est occupé par un noyau en matière organique, les corps de base étant obtenus en appliquant lesdites particules sur le noyau et en recouvrant le tout d'un dépôt chimique du premier matériau métallique et le noyau étant éliminé par pyrolyse lors du brasage.
- Le premier matériau métallique est éliminé par attaque chimique sélective après brasage.
- Le premier matériau métallique est converti par un traitement d'aluminisation après brasage.
- Lesdites coques ont sensiblement une forme sphérique.

L'invention a également pour objet un ensemble de corps creux métalliques tel qu'on peut l'obtenir par le procédé défini ci-dessus, dans lequel chaque corps creux comprend une couche de superalliage à base de nickel et/ou de cobalt entourant de tous côtés un espace central vide.

Selon un aspect de l'invention, on part d'une multiplicité de billes ou sphères et on dépose de la poudre de superalliage à la surface de chacune d'elles; pour ce faire on colle la poudre de l'alliage désiré pour la coque sur la surface des sphères servant de mandrin. Pour assurer un bon maintien des poudres pendant les opérations de brasage des grains de poudre entre eux, une coque rigide est nécessaire. Elle peut être déposée, si elle n'est pas présente à l'origine, soit par dessus les poudres de superalliage soit par dessous.

Pour constituer le matériau, les billes seront assemblées par brasage. Pour ce faire, les billes élémentaires (en nickel pur, en nickel composite, en nickel revêtu par mécanosynthèse et en nickel revêtu par un superalliage collé) sont traitées chimiquement pour recevoir un dépôt de brasure (alliage nickel-bore déposé par le procédé décrit dans FR 2 531 103) qui sera suivi d'un traitement thermique pour le brasage proprement dit.

Aux fins d'améliorer les propriétés en oxydation et en corrosion à chaud des objets ainsi obtenus, on peut faire subir au matériau un traitement d'aluminisation modifiée ou non tel que décrit par exemple dans FR 1 490 744 A, FR 2 094 258 A, FR 2 276 794 A, FR 2 638 174 A et FR 2 853 329 A. En effet, la composition d'un superalliage est choisie pour assurer la charge thermomécanique au cours de l'application haute température; mais sa résistance aux conditions thermochimiques de la veine gazeuse doit être assurée par un revêtement protecteur.

L'invention est illustrée ci-après par des exemples non limitatifs.

### Exemple I

Les dépôts électrolytiques ne permettent pas d'obtenir la composition chimique d'un superalliage. Pour pallier cette difficulté on peut fritter directement de la poudre de superalliage pour obtenir l'alliage désiré. Si on moule cette poudre on peut, après les traitements thermiques adéquats, obtenir la forme désirée. Mais cette opération ne permet pas d'obtenir des sphères creuses car la coque de la sphère s'effondre bien avant qu'un début de frittage puisse avoir lieu. Aussi, l'idée de départ est de coller des poudres de superalliage directement à la surface de mandrins en forme de billes et d'appliquer un traitement thermique destiné à fritter les grains de poudre de superalliage entre eux. Cette opération ne peut avoir lieu qu'à très haute température.

Pour contourner cette nouvelle difficulté, les inventeurs ont décidé d'utiliser une technique de brasage. Ce traitement, inspiré de celui décrit dans le brevet du demandeur n° 2 777 215, consiste à déposer une fine couche de brasure à base de nickel-bore à la surface de chaque grain de poudre de superalliage, ici l'alliage commercialisé sous la dénomination IN738 dont la composition est la suivante en % massiques:
Ni: base; Co: 8,5; Cr: 16,0; Ti: 3,4; Al: 3,4; W: 2,6; Mo: 1,75; Ta: 1,75; C: 0,17.

Ainsi un simple traitement thermique permet de braser les grains de poudre ensemble et de reconstituer le superalliage. Lorsque la poudre superalliage est prétraitée par un dépôt chimique de Ni-B, la couche de poudre devient, après un recuit, un alliage dense et homogène car les grains de poudre sont brasés entre eux. Dans le cas de cette invention, la couche de brasure Ni-B déposée est d'environ 0,1 µm. Cette couche est facile à obtenir de la manière suivante: on calcule la surface du lot de poudre à traiter. On en déduit la masse d'une couche de 0,1 µm de nickel-bore (masse volumique 8,25 g/cm³ pour une teneur en bore d'environ 4 % en masse). Sachant que le bain doit contenir environ 8 g/l de nickel pour fonctionner et que l'on désire travailler jusqu'à épuisement (c'est-à-dire jusqu'à ce que la concentration en nickel devienne nulle), il faut et il suffit d'ajuster la quantité de bain à la quantité de poudre à traiter. De cette manière on obtient très facilement une couche de brasure d'épaisseur prédéterminée et reproductible.

La poudre ainsi traitée doit être appliquée sur un mandrin sphérique dans le but d'obtenir des sphères creuses. Les poudres sont directement collées à la surface de billes en polystyrène expansé. Pour réaliser ce collage on procède comme suit:
- On mélange dans un verre de montre environ 90 cm³ de poudre d'IN738 (D₅₀ ≈ 40 µm) revêtue de 0,1 µm de nickel bore et 10 cm³ de colle époxy de marque ARALDITE 2011 à l'aide d'un pistolet applicateur qui permet de doser les différentes quantités de colle et de durcisseur pour obtenir le mélange optimal conseillé par le fabricant.
- Dans un deuxième temps on y ajoute une centaine de billes en polystyrène.
- Puis à l'aide d'un second verre de montre on roule les billes dans le mélange poudre + colle époxy.
- Dès que toute la surface des mandrins est recouverte, les billes ainsi revêtues sont disposées sur un plateau perforé et mis au séchage à l'étuve à 60 °C.

L'épaisseur de poudre + colle obtenue est d'environ 0,1 mm.

Pour garder une tenue mécanique minimale des sphères devenant creuses à l'élimination du mandrin, une coque encore rigide à la température de fusion du nickel-bore est nécessaire. Pour ce faire un mince dépôt de nickel d'environ 40 µm est déposé à la surface de la couche composite poudre + nickel-bore + colle époxy.

À ce stade le mandrin de polystyrène peut être dissous après le dépôt de nickel à l'aide d'acétone ou de préférence de benzène, avec, cependant, le risque d'obtenir un effondrement de la bille par dissolution du mandrin et de la colle. Il est donc préférable d'éliminer par pyrolyse le mandrin en même temps que la colle au cours du traitement thermique.

Dans ce cas le traitement thermique choisi favorise une élimination douce du polystyrène par carbonatation. Pour ce faire les billes sont placées en vrac dans un pot en alumine muni d'un couvercle ajouré destiné à conserver les billes en place durant les opérations de pompage. Une fois un vide meilleur que 10⁻³ Pa obtenu, on applique le traitement thermique suivant:
- rampe 0,5 °C par minute jusqu'à la température de 450 °C,
- palier de 45 minutes,
- rampe 5 °C par minute jusqu'à la température de 1150 °C,
- palier de 20 minutes,
- refroidissement rapide (de 1150 °C jusqu'à 600 °C en environ 15 minutes).

À l'issue de ce traitement on obtient des billes en IN738 revêtues de nickel. Ce dernier peut être éliminé par un simple lavage dans une solution d'acide nitrique à 20 % en volume. Mais, dans le cas d'une protection contre l'oxydation et la corrosion à chaud, cette couche de nickel peut avantageusement être utilisée pour construire le revêtement de bêta NiAl par un traitement d'aluminisation bien connu de l'homme du métier. Dans cet exemple, les billes ainsi fabriquées ne sont pas assemblées entre elles et peuvent subir un traitement de surfaçage visant à les polir comme il est pratiqué dans le cas de la fabrication des billes de roulement à billes, à la seule différence que, dans notre cas, les sphères obtenues seront creuses. Elles peuvent ensuite être liées entre elles pour obtenir une structure métallique alvéolaire unitaire, par exemple par le procédé décrit dans FR 2 585 445 A.

### Exemple II

À la différence de l'exemple I, on utilise ici en tant que mandrin des sphères creuses en nickel approvisionnées auprès de la société ATECA. Ces sphères creuses sont exemptes de polystyrène, un noyau initial de polystyrène ayant été éliminé par traitement thermique au cours du processus de fabrication du fournisseur.

Après dépôt d'un mélange de poudre d'IN738 et de colle comme décrit dans l'exemple I, les sphères sont disposées sur un plateau perforé et mises à sécher à l'étuve à 60 °C. Contrairement à l'exemple I, les billes peuvent alors subir directement le traitement thermique. Pour ce faire, les billes sont mises en place sur un support de forme approprié selon la structure finale à obtenir, par exemple un support en forme de dièdre pour obtenir un empilement compact, puis disposées dans un four sous vide. Pour éviter une destruction du montage on peut soit recouvrir l'ensemble d'un couvercle ajouré (pour permettre l'élimination de l'air) soit coller les billes entre elles avec une colle à prise rapide cette fois-ci (de type cyanoacrylate).

Dans tous les cas le traitement thermique à appliquer pourra être celui destiné à une opération de brasage quelconque car, hors la pyrolyse des colles (époxy et le cas échéant cyanoacrylate) il n'y a pas de polystyrène à éliminer. Une fois un vide meilleur que 10-3 Pa obtenu, on applique le traitement thermique suivant:
- rampe 5 °C par minute jusqu'à la température de 450 °C,
- palier de 45 minutes,
- rampe 5 °C par minute jusqu'à la température de 1150 °C,
- palier de 20 minutes,
- refroidissement rapide (de 1150 °C jusqu'à 600 °C en environ 15 minutes).

Dans ce cas l'objet final est obtenu en une seule opération: les grains de poudre sont brasés entre eux et les sphères creuses entre elles. Par contre, dans ce cas, il n'est pas possible de roder la partie externe de la coque pour obtenir une sphère parfaite.

Comme dans l'exemple précédent, après les opérations d'assemblage, il est possible d'effectuer une aluminisation bien connue de l'homme du métier aux fins de protéger les objets obtenus contre l'oxydation et la corrosion à chaud.

### Exemple III

On procède comme dans l'exemple II en remplaçant la poudre d'IN738 par de l'Astroloy dont la composition est la suivante en % massiques:
Ni: base; Co: 17,0; Cr: 15,0; Ti: 3,5; Al: 4,0; Mo: 5,0; C: 0,04; B: 0,025.

On obtient un résultat analogue, à savoir un objet en superalliage Astroloy aluminisé.

L'invention n'est pas limitée au nickel et aux superalliages à base de nickel en tant que premier et second matériaux métalliques, mais elle est applicable à tous couples formés par un premier matériau métallique apte à former directement une coque continue, notamment par dépôt chimique, et un second matériau métallique n'ayant pas cette aptitude mais pouvant subir un brasage à l'état de poudre. On peut citer en tant que second matériau métallique, sans que cette liste soit exhaustive, les poudres d'alliages ferreux (aciers courants et réfractaires), d'alliages à base de nickel, de cobalt, de chrome, de cuivre, d'argent ou d'or. Cette technique est aussi applicable à des formes d'objets autres que des sphères: cubes creux, tubes de petites ou de grandes dimensions. Cette technique permet aussi de réaliser un matériau à la demande: l'objet est calculé, le mandrin est réalisé et le matériau final est réalisé (approche dite "material by design"). De ce fait, il est possible d'appliquer cette technique à des objets creux non plus sphériques mais de forme quelconque, dépendant du mandrin

## Revendications

1. Procédé pour réaliser simultanément une multiplicité de corps creux métalliques à partir d'une multiplicité de corps de base comprenant chacun une coque en un premier matériau métallique entourant de tous côtés un espace central exempt de matériau métallique, et des particules à base d'un second matériau métallique différent du premier recouvrant la face intérieure et/ou la face extérieure de ladite coque, **caractérisé en ce que** lesdites particules de chaque corps de base ont reçu préalablement un dépôt de brasure, sont ensuite appliquées pour recouvrir la face intérieure et/ou la face extérieure de ladite coque, puis soumises à un traitement thermique [et sont liées] pour les lier entre elles par brasage.

2. Procédé selon la revendication 1, dans lequel le premier matériau métallique est constitué de nickel et/ou de cobalt.

3. Procédé selon l'une des revendications 1 et 2, dans lequel le second matériau métallique est constitué d'un superalliage à base de nickel et/ou de cobalt.

4. Procédé selon la revendication 3, dans lequel le brasage est réalisé en utilisant comme brasure un alliage à base de nickel et/ou de cobalt contenant du bore ou du phosphore.

5. Procédé selon la revendication 4, dans lequel la brasure est obtenue par dépôt chimique à partir d'un bain contenant au moins un sel de nickel et/ou de cobalt et un composé de bore ou de phosphore.

6. Procédé selon l'une des revendications précédentes, dans lequel la brasure est sous la forme d'un revêtement desdites particules.

7. Procédé selon l'une des revendications précédentes, dans lequel les particules sont mises en oeuvre par collage au moyen d'une colle qui est éliminée par pyrolyse lors du brasage.

8. Procédé selon l'une des revendications précédentes, dans lequel ledit espace central des corps de base est vide, lesdites particules recouvrant la face extérieure de la coque.

9. Procédé selon la revendication 8, dans lequel on dispose les corps de base en contact mutuel de manière à obtenir une structure métallique alvéolaire unitaire par le brasage des particules recouvrant l'ensemble des corps de base.

10. Procédé selon l'une des revendications 1 à 7, dans lequel ledit espace central des corps de base est occupé par un noyau en matière organique, les corps de base étant obtenus en appliquant lesdites particules sur le noyau et en recouvrant le tout d'un dépôt chimique du premier matériau métallique et le noyau étant éliminé par pyrolyse lors du brasage.

11. Procédé selon la revendication 10, dans lequel le premier matériau métallique est éliminé par attaque chimique sélective après brasage.

12. Procédé selon la revendication 10, dans lequel le premier matériau métallique est converti par un traitement d'aluminisation après brasage.

13. Procédé selon l'une des revendications précédentes, dans lequel lesdites coques ont sensiblement une forme sphérique.

14. Ensemble de corps creux métalliques tel qu'on peut l'obtenir par le procédé selon l'une des revendications précédentes, dans lequel chaque corps creux comprend une couche de superalliage à base de nickel et/ou de cobalt entourant de tous côtés un espace central vide.

## Patentansprüche

1. Verfahren zum gleichzeitigen Herstellen einer Mehrzahl von hohlen metallischen Körpern ausgehend von einer Mehrzahl von Basiskörpern, die jeweils ein Gehäuse aus einem ersten metallischen Material, das auf allen Seiten einen Zentralraum umgibt, der frei von metallischem Material ist, und Partikel auf der Basis eines zweiten metallischen Materials aufweist, das unterschiedlich ist zum ersten Material, das die Innenseite und/oder die Außenseite des Gehäuses bedeckt, **dadurch gekennzeichnet, dass** die Partikel eines jeden Basiskörpers vorher eine Lötschicht erhalten haben, anschließend aufgebracht werden, um die Innenseite und/oder die Außenseite des Gehäuses zu bedecken, sodann einer Wärmebehandlung unterworfen werden, um sie untereinander durch Hartlöten zu verbinden.

2. Verfahren nach Anspruch 1, bei dem das erste metallische Material aus Nickel und/oder Kobalt gebildet ist.

3. Verfahren nach Anspruch 1 oder 2, bei dem das zweite metallische Material aus einer Superlegierung auf der Basis von Nickel und/oder Kobalt gebildet ist.

4. Verfahren nach Anspruch 3, bei dem das Hartlöten unter Verwendung einer Legierung auf der Basis von Nickel und/oder Kobalt als Lot verwirklicht wird, die Bor oder Phosphor enthält.

5. Verfahren nach Anspruch 4, bei dem das Hartlot durch chemische Ablagerung erhalten wird, ausgehend von einem Bad, das wenigstens ein Nickelsalz und/oder ein Kobaltsalz und einen Bestandteil aus Bor oder Phosphor enthält.

6. Verfahren nach einem der vorhergehenden Ansprüche, bei dem das Hartlot in Form eines Überzugs der Partikel gebildet wird.

7. Verfahren nach einem der vorhergehenden Ansprüche, bei dem die Partikel durch Kleben wenigstens eines Klebers erzeugt werden, der durch Pyrolyse bei dem Hartlöten eliminiert wird.

8. Verfahren nach einem der vorhergehenden Ansprüche, bei dem der Zentralraum des Basiskörpers leer ist, wobei die Partikel die Außenseite des Gehäuses bedecken.

9. Verfahren nach Anspruch 8, bei dem die Basiskörper in gegenseitigen Kontakt gesetzt werden, um eine einzige alveolare metallische Struktur durch das Hartlot der Partikel zu erhalten, die die Gesamtheit der Basiskörper bedecken.

10. Verfahren nach einem der Ansprüche 1 bis 7, bei dem der Zentralraum des Basiskörpers von einem Kern aus organischem Material besetzt ist, wobei die Basiskörper erhalten werden unter Aufbringen der Partikel auf den Kern und unter Überziehen des Gesamten mit einer chemischen Ablagerung des ersten metallischen Materials und bei dem der Kern durch Pyrolyse beim Hartlöten eliminiert wird.

11. Verfahren nach Anspruch 10, bei dem das erste metallische Material durch selektiven chemischen Angriff nach dem Hartlöten eliminiert wird.

12. Verfahren nach Anspruch 10, bei dem das erste metallische Material durch eine Aluminisierungsbehandlung nach dem Hartlöten umgewandelt wird.

13. Verfahren nach einem der vorhergehenden Ansprüche, bei dem die Gehäuse im Wesentlichen Kugelform aufweisen.

14. Anordnung von metallischen Hohlkörpern, wie sie durch das Verfahren nach einem der vorhergehenden Ansprüche erhalten werden können, bei der jeder hohle Körper eine Superlegierungsschicht auf der Basis von Nickel und/oder von Kobalt aufweist, die auf allen Seiten einen leeren Zentralraum umgibt.

## Claims

1. Method for simultaneously producing a multiplicity of hollow metal bodies from a multiplicity of basic bodies each comprising a shell made of a first metallic material surrounding on all sides a central space free from metallic material, and particles based on a second metallic material different from the first covering the internal face and/or the external face of said shell, **characterised in that** said particles of each body have previously received a deposit of brazing metal, are then applied to cover the internal face and/or the external face of said shell, then subjected to a heat treatment to connect them to one another by brazing.

2. Method according to Claim 1, wherein the first metallic material consists of nickel and/or cobalt.

3. Method according to one of Claims 1 and 2, wherein the second metallic material consists of a superalloy based on nickel and/or cobalt.

4. Method according to Claim 3, wherein the brazing is carried out using as a brazing metal an alloy based on nickel and/or cobalt containing boron or phosphorus.

5. Method according to Claim 4, wherein the brazing metal is obtained by chemical deposition using a bath containing at least one nickel and/or cobalt salt and a compound of boron or phosphorus.

6. Method according to one of the preceding claims, wherein the brazing metal is in the form of a coating of said particles.

7. Method according to one of the preceding claims, wherein the particles are made use of by gluing by means of an adhesive that is eliminated by pyrolysis during brazing.

8. Method according to one of the preceding claims, wherein said central space of the basic bodies is empty, said particles covering the external face of the shell.

9. Method according to Claim 8, wherein the basic bodies are placed in mutual contact so as to obtain a unitary cellular metallic structure by brazing the particles covering all the basic bodies.

10. Method according to one of Claims 1 to 7, wherein said central space of the basic bodies is occupied by a core made of organic material, the basic bodies being obtained by applying said particles on the core and covering the whole with a chemical deposit of the first metallic material and the core being eliminated by pyrolysis during the brazing.

11. Method according to Claim 10, wherein the first metallic material is eliminated by selective chemical attack after brazing.

12. Method according to Claim 10, wherein the first metallic material is converted by an aluminising treatment after brazing.

13. Method according to one of the preceding claims, wherein said shells are substantially spherical in shape.

14. Set of hollow metallic bodies such as can be obtained by the method according to one of the preceding claims, wherein each hollow body comprises a layer of superalloy based on nickel and/or cobalt surrounding on all sides an empty central space.
